# EUROPÄISCHE PATENTANMELDUNG

(11) **EP 1 084 782 A1**
(43) Veröffentlichungstag der Anmeldung: **21.03.2001**
(21) Anmeldenummer: 00114360.1
(22) Anmeldetag: 05.07.2000
(51) Int. Cl.: B23B 31/02

(54) **Schrumpffuter**

(30) Priorität: 16.09.1999 DE 19944440
(71) Anmelder: Emuge-Werk Richard Glimpel Fabrik für Präzisionswerkzeuge (vormals Moschkau & Glimpel), D-91207 Lauf (DE)
(72) Erfinder: Glimpel, Helmut, Dipl.-Ing., 91207 Lauf a. d. Pegnitz (DE)
(74) Vertreter: Matschkur, Peter

(57) **Zusammenfassung**

Schrumpffutter (1) mit einem klemmend in der gegenüber dem Durchmesser des Werkzeugschaftes kleiner dimensionierten Werkzeugaufnahme (3) des Futterkörpers (4) gehalterten Werkzeug, das durch einseitiges Erwärmen des Futterkörpers (4) einsetzbar bzw. herausnehmbar ist, wobei in dem die Werkzeugaufnahme umgebenden Bereich des Futterkörpers eine Zwischenschicht (6) aus thermisch isolierendem Material zur Verringerung des Wärmeübergangs zum Werkzeugschaft vorgesehen ist.

## Beschreibung

Die Erfindung bezieht sich auf ein Schrumpffutter mit einem klemmend in der gegenüber dem Durchmesser des Werkzeugschaftes kleiner dimensionierten Werkzeugaufnahme des Futterkörpers gehalterten Werkzeug, das durch einseitiges Erwärmen des Futterkörpers einsetzbar bzw. herausnehmbar ist.

Die einseitige Erwärmung des Futterkörpers zur Aufweitung der Werkzeugaufnahme und zum Einsetzen des Werkzeugs ist völlig unproblematisch, da hier ja der Futterkörper und das Werkzeug noch getrennt sind. Schwierigkeiten bereitet aber das Herausnehmen des Werkzeugs, da bei der hierfür erforderlichen Erwärmung des Futterkörpers zwangsläufig und unvermeidlich auch eine Erwärmung des Werkzeugschaftes mit stattfindet, die der Öffnungsbewegung durch Aufweiten der Werkzeugaufnahme entgegenwirkt. Bei üblichen Stählen für die Futterkörper mit einem thermischen Ausdehnungskoeffizienten von 12 µm/_{mK} und Hartmetallwerkzeugen mit einem thermischen Ausdehnungskoeffizienten von 6 µm/_{mK} ergeben sich trotz der Miterwärmung des Werkzeugschaftes ausreichende Aufweitungsunterschiede zwischen der Werkzeugaufnahme und dem Werkzeugschaft, so dass auch in diesen Fällen relativ unproblematisch eine Entnahme des Werkzeugs durch Erwärmung des Futterkörpers möglich ist.

Erhebliche Probleme ergeben sich allerdings bei der Verwendung von Werkzeugen aus Schnellstahl die ebenfalls einen thermischen Ausdehnungskoeffizienten von 12 µm/_{mK} aufweisen. In diesen Fällen lässt sich das Werkzeug praktisch überhaupt nicht mehr aus dem Futter herausnehmen, da jede Erwärmung des Futters auch eine Erwärmung des Werkzeugs und damit eine nahezu gleiche Ausdehnung zur Folge hat.

Der Erfindung liegt daher die Aufgabe zugrunde ein Schrumpffutter der eingangs genannten Art so auszugestalten, dass unabhängig vom thermischen Ausdehnungskoeffizienten ein Herausnehmen des Werkzeugs erleichtert und vereinfacht wird.

Zur Lösung dieser Aufgabe ist erfindungsgemäß vorgesehen, dass in dem die Werkzeugaufnahme umgebenden Bereich des Futterkörpers eine Zwischenschicht aus thermisch isolierendem Material zur Verringerung des Wärmeübergangs zum Werkzeugschaft vorgesehen ist.

Durch die erfindungsgemäße Ausbildung wird die bei der Erwärmung des Futterkörpers unvermeidliche Miterwärmung des Werkzeugs durch Wärmeleitung erheblich vermindert, so dass ausreichende Temperaturunterschiede des Futterkörpers und des Werkzeugschaftes entstehen, die auch bei gleichem thermischen Ausdehnungskoeffizienten entsprechende unterschiedliche Weitungen zur Folge haben, so dass das Werkzeug sich problemlos aus der Werkzeugaufnahme herausnehmen lässt. Dabei kann vorgesehen sein, dass die Zwischenschicht die Werkzeugaufnahme in Abstand umgibt, also beispielsweise in einen mehr oder weniger breiten Ringspalt des Futterkörpers eingesetzt ist, oder aber dass die Zwischenschicht eine Buchse ist, die unter Vorspannung in die Werkzeugaufnahme eingebracht ist, derart, dass sie bei Erwärmung der Öffnungsbewegung des Futterkörpers folgt. Diese Einbringung unter Vorspannung, vorzugsweise dergestalt, dass die Buchse mit dem thermisch isolierenden Material stark heruntergekühlt wird, so dass sie gerade in die Werkzeugaufnahme des auf Raumtemperatur befindlichen Futterkörpers eingeschoben werden kann, ist von entscheidender Bedeutung. Würde man diese Vorspannung nicht vorsehen, so würde die auf jeden Fall kältere Buchse aus thermisch isolierendem Material beim Öffnen der Werkzeugaufnahme des wieder erhitzten Futterkörpers dieser Öffnungsbewegung nicht folgen und demzufolge das Werkzeug nicht freigeben können.

Neben dem Einsetzen einer relativ dickwandigen Buchse die zur Gänze oder teilweise aus thermisch isolierendem Material besteht kann dabei auch vorgesehen sein, dass die Innenfläche der Werkzeugaufnahme des Futterkörpers mit einer relativ dünnwandigen und einer anschließenden Härtung unterzogenen Schicht des thermisch isolierenden Materials überzogen ist. Als thermisch isolierendes Material eignet sich beispielsweise Zirkonoxid ZrO₂ vorzugsweise in dotierter Form, oder aber auch Teflon.

Um die Buchse mit der thermisch isolierenden Zwischenschicht, die - wie gesagt - vollständig aus dem thermisch isolierenden Material bestehen kann oder aber auch als Stahlbuchse ausgebildet sein kann, die lediglich außen mit dem thermisch isolierenden Material beschichtet ist, kann zur einfacheren Einbringung in die Werkzeugaufnahme unter Vorspannung nicht nur größer dimensioniert und durch Abkühlen erst soweit verkleinert werden, dass sie in die Werkzeugaufnahme passt, sondern es kann darüber hinaus auch vorgesehen sein, dass die Buchse längs oder wendelförmig geschlitzt ist, um eine solche Einbringung unter Vorspannung zu bewerkstelligen.

Zur noch weitgehenderen Abschirmung des Werkzeugs gegenüber der Erwärmung über den Futterkörper kann zusätzlich noch vorgesehen sein, dass die Buchse einen, gegebenenfalls mit einer Kühlmittelbohrung versehenen Boden besitzt, wobei bevorzugt der Boden nicht an der Buchse angeformt ist, sondern durch eine in die Werkzeugaufnahme eingelegte Scheibe gebildet sein kann.

Schließlich liegt es auch noch im Rahmen der Erfindung die Zwischenschicht nicht durch eine geschlossene Buchse oder einen geschlossenen Mantel auf der Innenfläche der Werkzeugaufnahme auszubilden, sondern durch achsparallele in entsprechende Bohrungen oder Nuten der Wand neben der Werkzeugaufnahme eingebettete untereinander beabstandete Stäbe aus thermisch isolierendem Material. Dabei ist es zweckmäßig die Nuten oder Bohrungen so anzuordnen, dass sie nicht vollständig außerhalb des Durchmessers der Werkzeugaufnahme liegen, sondern diese anschneiden, so dass die Stäbe leicht über die zylindrische Wandung der Werkzeugaufnahme nach innen überstehen. Dabei liegt dann der Werkzeugschaft an einer Vielzahl von Flächen oder Linien an den einzelnen Stäben an und hat überhaupt keine unmittelbare thermische Verbindung zum Futterkörper. Hierdurch wird der Wärmeübergang zusätzlich besonders stark herabgesetzt und damit eine entsprechend hohe Temperaturdifferenz zwischen dem Werkzeug und dem induktiv, über eingebettete Heizschlangen oder über eine sonstige äußere Wärmequelle erwärmten Futterkörper geschaffen, die wiederum ein besonders einfaches und sicheres Herausnehmen des Werkzeugs für einen Werkzeugwechsel gewährleistet.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: einen Schnitt durch ein erfindungsgemäßes Schrumpffutter mit einer in die Werkzeugaufnahme eingesetzten Buchse aus thermisch isolierendem Material,
- Fig. 2: einen Schnitt durch ein abgewandeltes Futter mit einer dünnwandigen Auskleidung der Werkzeugaufnahme durch ein thermisch isolierendes Material,
- Fig. 3: einen Schnitt durch ein Futter, bei dem die Buchse zusätzlich einen Boden aufweist,
- Fig. 4: einen Schnitt durch ein erfindungsgemäßes Futter entsprechend Fig. 3, bei der der Boden der Buchse durch eine in die Werkzeugaufnahme eingelegte Scheibe gebildet ist,
- Fig. 5: ein bevorzugtes Ausführungsbeispiel, bei dem das thermisch isolierende Material eine Außenbeschichtung einer in die Werkzeugaufnahme des Schrumpffutters eingesetzten Stahlhülse bildet,
- Fig. 6: eine speziell für höchste Drehzahlen geeignete Ausbildung eines erfindungsgemäßen Schrumpffutters, bei dem das leichte thermisch isolierende Material die Werkzeugaufnahme in Abstand umgibt,
- Fig. 7: einen vergrößerten Schnitt durch ein erfindungsgemäßes Futter, bei dem die Werkzeugaufnahme von einzelnen Stäben aus thermisch isolierendem Material umgeben ist,
- Fig. 8: einen vergrößerten Ausschnitt des Schnitts gemäß Fig. 7 und
- Fig. 9: eine Skizze in der schematisch die Dehnungen der verschiedenen Bauteile während der Montage der Isolierbuchse bzw. beim Fügen eines Werkzeugs dargestellt sind.

Die in den verschiedenen Figuren gezeigten Schrumpffutter 1 weisen am einen Ende einen Spannabschnitt 2 zum Einsetzen in die Werkzeugmaschine auf, während sie am anderen Ende mit einer zylindrischen Werkzeugaufnahme 3 versehen sind in die ein Werkzeug, beispielsweise ein Bohrer, Fräser oder dergleichen, einsteckbar und durch thermisches Schrumpfen des Futterkörpers 4 klemmend gehaltert werden soll. In allen gezeigten Ausführungsbeispielen ist der Futterkörper 4 mit einer Kühlmittelbohrung 5 versehen durch die Kühlmittel nach vorne transportiert wird. Dabei kommt es letztendlich nicht darauf an, ob das Kühlmittel längs der Außenfläche des Werkzeugs geleitet wird oder durch eine Innenbohrung nach vorne gebracht wird. Hierauf wird aber im Nachfolgenden nicht mehr eingegangen, da dies bekannt ist und nicht Gegenstand der vorliegenden Erfindung ist.

Um zu vermeiden, dass ein in die Werkzeugaufnahme 3 eingesetztes Werkzeug beim späteren Erwärmen des Futterschaftes 4 so stark miterwärmt wird, dass es nicht mehr herausgenommen werden kann, ist erfindungsgemäß eine thermische Isolierung vorgesehen, die in verschiedenen Ausführungsbeispielen anhand der Zeichnungen dargestellt ist.

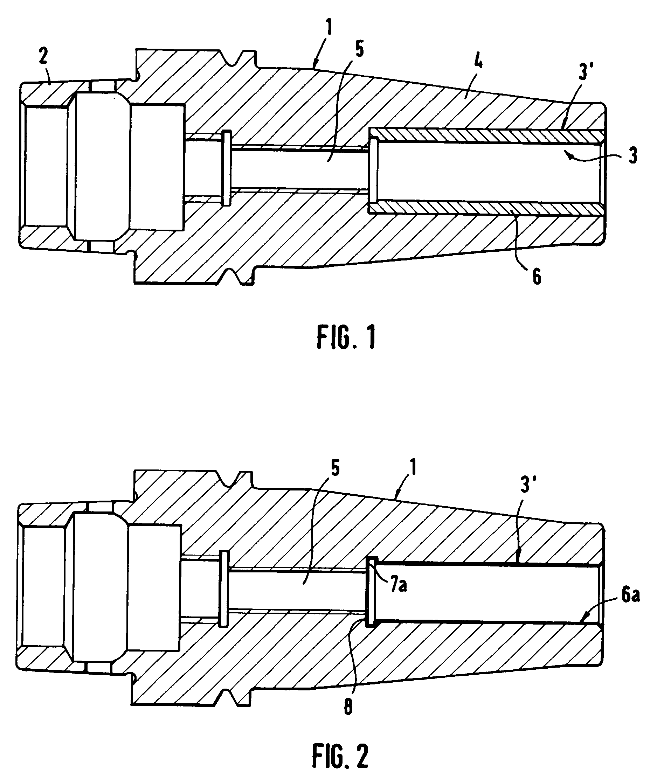

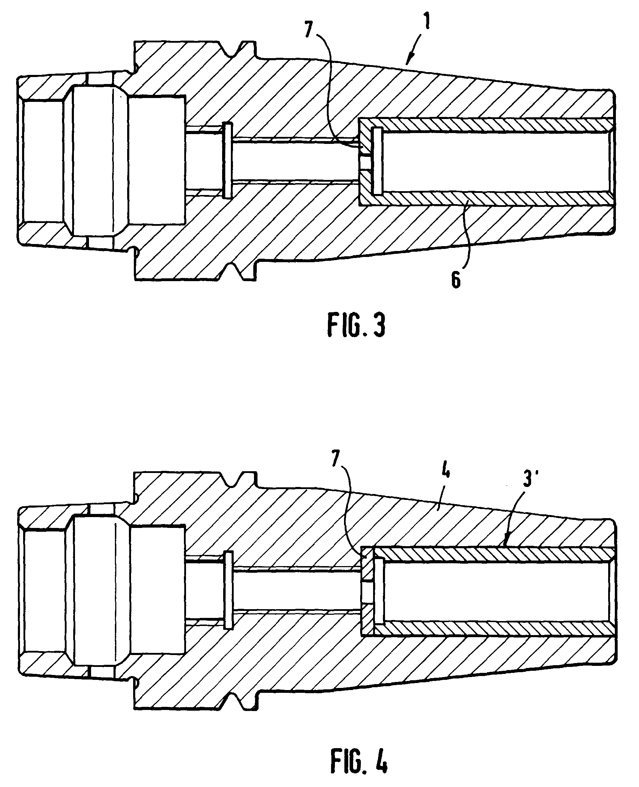

Beim Ausführungsbeispiel nach Fig. 1 ist eine Buchse 6 aus thermisch isolierendem Material, beispielsweise aus Magnesium oder Kalzium dotiertem ZrO₂ unter Vorspannung in die Werkzeugaufnahme 3' des Futterkörpers 4 eingesetzt, wobei diese Einbringung unter Vorspannung sowohl dadurch erfolgen kann, dass man die Buchse 6, die bei Zimmertemperatur einen größeren Durchmesser aufweist als die Werkzeugaufnahme 3', so stark abkühlt bis sie durch Schrumpfung klein genug geworden ist, dass sie in die Werkzeugaufnahme 3' eingeschoben werden kann. Darüber hinaus kann das Einbringen unter Vorspannung auch durch eine längs- oder wendelförmige Schlitzung der Buchse mit dem thermisch isolierendem Material erfolgen. Die Ausführungsbeispiele nach den Fig. 3 und 4 unterscheiden sich lediglich durch das Vorsehen eines zusätzlichen Bodens, wobei der Boden 7 in Fig. 3 an der Buchse 6 angeformt ist, während der Boden 7 beim Ausführungsbeispiel nach Fig. 4 eine lose in die Werkzeugausnehmung 3' des Futterkörpers 4 eingelegte Lochplatte darstellt. Die Fig. 2 zeigt eine Ausführung, bei der statt einer als separates Bauteil gefertigten und unter Vorspannung eingebrachten Buchse aus thermisch isolierendem Material die Innenfläche der Werkzeugaufnahme 3' mit einer Schicht 6a des thermisch isolierenden Materials beschichtet ist, wobei in diesem Fall natürlich eine wesentlich geringere Schichtdicke vorgesehen ist als bei der separat gefertigten Buchse in Fig. 1 nach den anderen Ausführungsbeispielen. Durch eine zusätzliche Härtung lassen sich dann noch eine ausreichende Kratzfestigkeit dieser thermisch isolierenden Beschichtung 6a erzielen. Im gezeigten Ausführungsbeispiel nach Fig. 2 ist auch die um den Kühlmittelkanal 5 verbleibende Bodenfläche 8 der Werkzeugaufnahme 3' mit einer entsprechenden Beschichtung 7a aus thermisch isolierendem Material versehen.

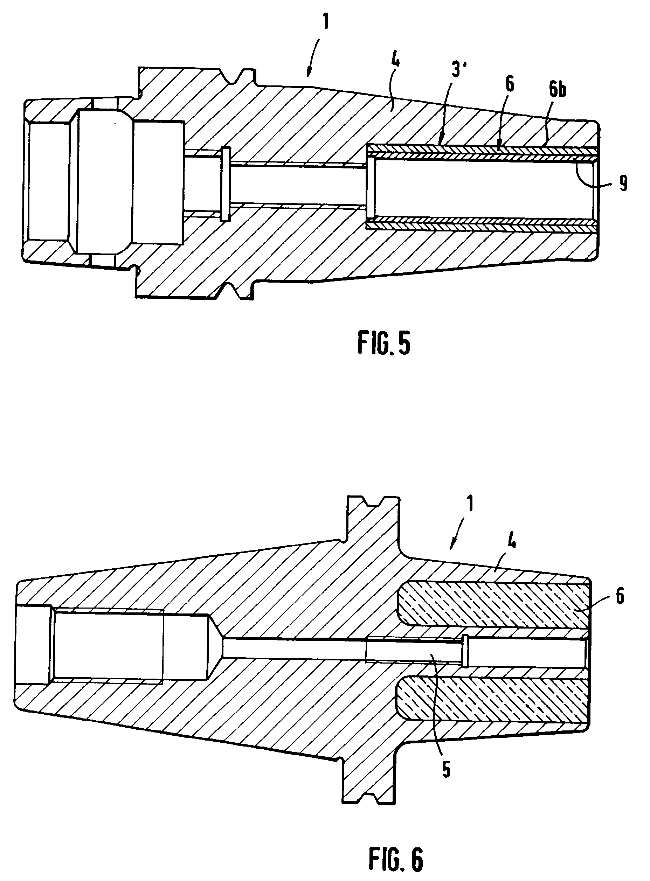

Ein bevorzugtes Ausführungsbeispiel eines erfindungsgemäßen Schrumpffutters zeigt die Fig. 5, die gegebenenfalls natürlich noch mit einem zusätzlichen Boden versehen sein könnte. In diesem Fall ist die Buchse 6 ein Verbundbauteil bestehend aus einer inneren Stahlhülse 9 und einer darauf aufgebrachten äußeren Schicht 6b aus thermisch isolierendem Material, wobei das Einsetzen unter Vorspannung in die Werkzeugausnehmung 3' des Futterkörpers 4 in gleicher Weise erfolgt wie es weiter oben bereits beschrieben worden ist.

Die Fig. 6 zeigt eine Ausbildung eines erfindungsgemäßen Futters für eine extrem hochdrehende Spindel (mit n = 20.000 min⁻¹ und darüber), wobei hier mehr die geringe Masse als die reine Wärmeisolierung der in einen Ringspalt des Futterkörpers 4 eingebrachten Isoliermasse 6 zum Tragen kommt. Dabei könnte der äußere Stahlmantel des Futterkörpers 4 um die Isoliermasse 6 gegebenenfalls sogar noch entfallen. Diese Ausführungsform eignet sich für ein besonders einfaches Erwärmen des Futterkörpers durch in die Isoliermasse 6 eingelegte elektrische Heizschlangen.

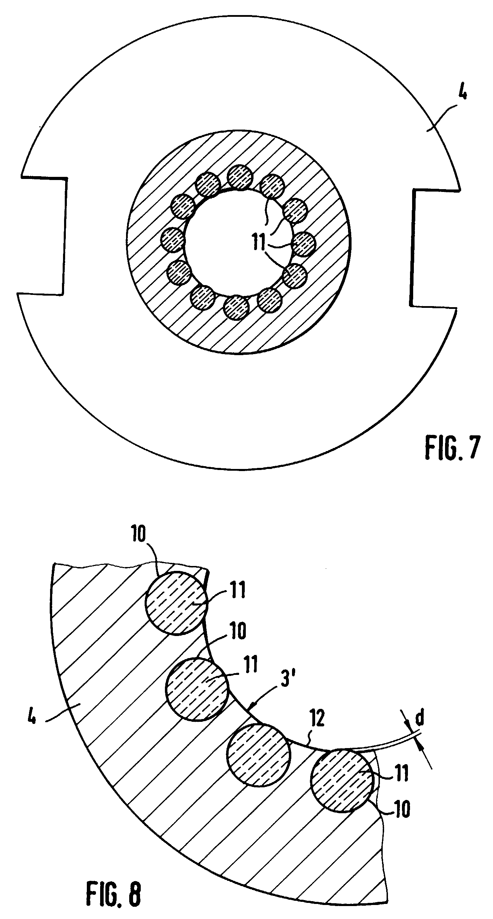

Die Fig. 7 und 8 zeigen eine weitere Möglichkeit der thermischen Isolierung des Werkzeugs gegenüber dem Futterkörper, wobei in Bohrungen 10 des Futterkörpers, die achsparallel zum Futterkörper eingebracht sind, einzelne Stäbe 11 eingebracht sind, und die Bohrungen so angeordnet sind, dass die Stäbe 11 wenigstens um das Maß d (Bruchteile von Millimetern) nach innen über die zylindrische Wandung 12 der Werkzeugaufnahme 3' überstehen. Das Werkzeug liegt damit lediglich an den Stäben 11 an und hat keinen unmittelbaren körperlichen Kontakt zum Futterkörper 4 was den Wärmeübergang zusätzlich herabsetzt.

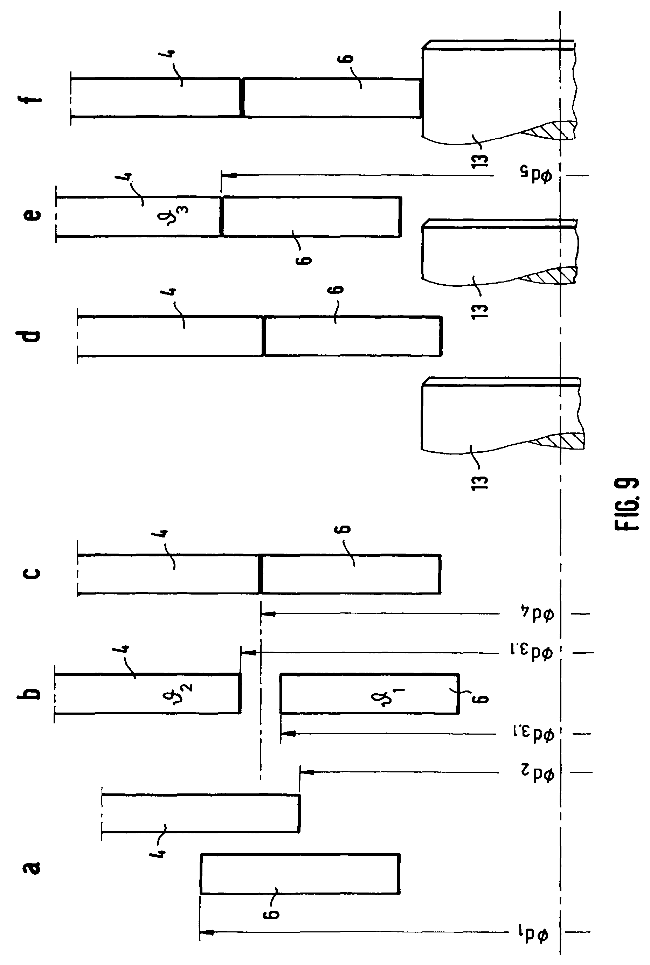

Die Fig. 9 zeigt schematisch den Durchmesser der verschiedenen Bauteile eines erfindungsgemäßen Schrumpffutters mit Isolierbuchse während der Montage der Isolierbuchse und beim Fügen eines Werkzeugs:

Mit 4 ist dabei wiederum der Futterkörper, mit 6 die Isolierbuchse und mit 13 das Werkzeug bezeichnet.

In Fig. 9a ist dabei die Ausgangssituation dargestellt, bei der die Isolierbuchse 6 noch nicht in den Futterkörper 4 eingefügt ist. Man erkennt aber, dass der Außendurchmesser d₁ der Isolierbuchse 6 bei gleicher Temperatur wie der Futterkörper 4 größer ist als der Innendurchmesser d₂ der Werkzeugaufnahme. Die Teile lassen sich also gar nicht ineinander schieben.

In Fig. 9b ist der Fall gezeigt, dass der Futterkörper 4 auf eine Temperatur ϑ₂ höher als die Raumtemperatur erhitzt und die Isolierbuchse 6 auf eine Temperatur ϑ₁ kleiner als die Raumtemperatur abgekühlt ist. Demzufolge hat nunmehr die Isolierbuchse 6 einen Außendurchmesser d_{3.1} der kleiner ist als der Innendurchmesser d_{3.2} der Werkzeugaufnahme des Futterkörpers 4. Die Teile lassen sich also ineinander schieben.

In Fig. 9c ist der Fall dargestellt, dass die Buchse eingeschrumpft ist und beide Teile auf Raumtemperatur abgekühlt sind. Im äußeren Futterkörper 4 herrschen Zugspannungen, in der inneren Isolierbuchse 6 Druckspannungen vor.

Anhand der Fig. 9d - 9f soll nachfolgend beschrieben werden wie das Fügen eines Werkzeugs in ein erfindungsgemäßes thermisch isoliertes Schrumpffutter erfolgt.

Die Fig. 9d zeigt die Verhältnisse bei Raumtemperatur (entsprechend der Fig. 9c), wobei man erkennt, dass bei Raumtemperatur ein Werkzeug 13 nicht gespannt werden kann, da dessen Durchmesser größer ist als der Innendurchmesser der Buchse 6.

In Fig. 9e ist der Fall dargestellt, dass durch äußere Wärmezufuhr (induktiv, Heißluft oder dergleichen) sich das Verbundelement aus dem Futterkörper 4 und der Isolierbuchse 6 ausgedehnt hat, wobei die Ausdehnung der Isolierbuchse maßgeblich auf deren Vorspannung beruht, da sie ja selbst nicht in gleichem Maß erwärmt worden ist wie der Futterkörper 4. Es gilt in diesem Fall, dass der Durchmesser d₅ größer als der Durchmesser d₄ in Fig. 9c ist, aber auf jeden Fall kleiner als der Durchmesser d₁ in Fig. 9a. Es herrschen etwas geringere Spannungen als im Fall der Fig. 9c bzw. 9d vor.

In Fig. 9f erkennt man die Verhältnisse beim fertig gespannten Werkzeug, das heißt nach Abkühlung auf Raumtemperatur ist der Werkzeugschaft gespannt und die herrschenden Spannungen haben sich gegenüber dem Fall 9c erhöht.

## Patentansprüche

1. Schrumpffutter mit einem klemmend in der gegenüber dem Durchmesser des Werkzeugschaftes kleiner dimensionierten Werkzeugaufnahme des Futterkörpers gehalterten Werkzeug, das durch einseitiges Erwärmen des Futterkörpers einsetzbar bzw. herausnehmbar ist, dadurch gekennzeichnet, dass in dem die Werkzeugaufnahme (3) umgebenden Bereich des Futterkörpers (4) eine Zwischenschicht aus thermisch isolierendem Material zur Verringerung des Wärmeübergangs zum Werkzeugschaft vorgesehen ist.

2. Schrumpffutter nach Anspruch 1, dadurch gekennzeichnet, dass die Zwischenschicht die Werkzeugaufnahme in Abstand umgibt.

3. Schrumpffutter nach Anspruch 1, dadurch gekennzeichnet, dass die Innenfläche der Werkzeugaufnahme (3') mit einer dünnwandigen, vorzugsweise harten, Schicht (6a) aus thermisch isolierendem Material überzogen ist.

4. Schrumpffutter nach Anspruch 1, dadurch gekennzeichnet, dass die Zwischenschicht eine Buchse (6) ist, die unter Vorspannung in die Werkzeugaufnahme (3) eingebracht ist, derart, dass sie bei Erwärmung der Öffnungsbewegung des Futterkörpers (4) folgt.

5. Schrumpffutter nach Anspruch 4, dadurch gekennzeichnet, dass die Buchse (6) längs- oder wendelförmig geschlitzt ist.

6. Schrumpffutter nach Anspruch 4 oder 5, dadurch gekennzeichnet, dass die Buchse (6) einen, gegebenenfalls mit einer Kühlmittelbohrung versehenen Boden (7) besitzt.

7. Schrumpffutter nach Anspruch 6, dadurch gekennzeichnet, dass der Boden (7) durch eine in die Werkzeugaufnahme (3) eingelegte Scheibe gebildet ist.

8. Schrumpffutter nach einem der Ansprüche 4 bis 7, dadurch gekennzeichnet, dass die Buchse (6) aus einer Stahlhülse (9) besteht, die außen mit dem thermisch isolierenden Material (6b) beschichtet ist.

9. Schrumpffutter nach Anspruch 8, dadurch gekennzeichnet, dass die Stahlhülse (9) aus einer Stahllegierung besteht, die einen deutlich höheren thermischen Ausdehnungskoeffizienten aufweist als der des umschließenden Stahl-Trägermaterials

10. Schrumpffutter nach einem der Ansprüche 1 bis 9, dadurch gekennzeichnet, dass das thermisch isolierende Material im Wesentlichen den gleichen thermischen Ausdehnungskoeffizienten wie der Futterkörper (4) aufweist.

11. Schrumpffutter nach Anspruch 1 oder 2, dadurch gekennzeichnet, dass die Zwischenschicht durch achsparallel in die Wandung der Werkzeugaufnahme (3) eingebettete untereinander beabstandete Stäbe (11) gebildet ist.

12. Schrumpffutter nach Anspruch 11, dadurch gekennzeichnet, dass die Stäbe (11) leicht über die zylindrische Wandung (12) der Werkzeugaufnahme (3') überstehen.

13. Schrumpffutter nach einem der Ansprüche 1 bis 12, dadurch gekennzeichnet, dass das thermisch isolierende Material, vorzugsweise dotiertes ZrO₂ ist.

14. Schrumpffutter nach einem der Ansprüche 1 bis 11, dadurch gekennzeichnet, dass das thermisch isolierende Material PTFE (Teflon) ist.
